# EUROPÄISCHE PATENTSCHRIFT

(11) **EP 1 325 544 B1**
(45) Veröffentlichungstag und Bekanntmachung des Hinweises auf die Patenterteilung: **20.07.2005**
(21) Anmeldenummer: 01978184.8
(22) Anmeldetag: 28.09.2001
(51) Int. Cl.: H02K 55/04, H01F 6/00

(54) **VORRICHTUNG MIT IM KRYOGENEN TEMPERATURBEREICH FERROMAGNETISCHEM UND MECHANISCH BELASTBAREM BAUTEIL**
DEVICE COMPRISING A COMPONENT, WHICH IS FERROMAGNETIC IN THE CRYOGENIC TEMPERATURE RANGE AND WHICH CAN BE SUBJECTED TO MECHANICAL STRESSES
DISPOSITIF COMPRENANT UN ELEMENT FERROMAGNETIQUE SITUE DANS LA PLAGE DES TEMPERATURES CRYOGENIQUES ET POUVANT ETRE SOLLICITE MECANIQUEMENT

(30) Priorität: 11.10.2000 DE 10050371
(43) Veröffentlichungstag der Anmeldung: 09.07.2003
(73) Patentinhaber: SIEMENS AKTIENGESELLSCHAFT, 80333 München (DE)
(72) Erfinder: STEINMEYER, Florian, Leafield, Oxfordshire OX8 5NP (GB)
(86) Internationale Anmeldenummer: PCT/DE2001/003730
(87) Internationale Veröffentlichungsnummer: WO 2002/031949

(56) Entgegenhaltungen:
- DE-A- 19 934 989
- GB-A- 380 805
- US-A- 4 687 525
- PATENT ABSTRACTS OF JAPAN vol. 014, no. 584 (E-1018), 27. Dezember 1990 (1990-12-27) & JP 02 254962 A (MITSUBISHI ELECTRIC CORP), 15. Oktober 1990 (1990-10-15)

## Beschreibung

Die vorliegende Erfindung bezieht sich auf eine Vorrichtung mit im kryogenen Temperaturbereich ferromagnetischem und mechanisch belastbarem Bauteil. Vorzugsweise handelt es sich hier um den Temperaturbereich der flüssigen Luft. Das insbesondere gegen mechanische Belastungs- und/oder Temperaturwechsel und Versprödung notwendigerweise sichere Material des mechanisch hoch belastbaren Bauteils der Vorrichtung muss außerdem auch für die vorgesehene magnetische Flussführung und/oder Flussverstärkung notwendige ferromagnetische Eigenschaft und/oder hohe magnetische Leitfähigkeit haben.

Aus dem Stand der Technik, z.B. Reed, Materials at Low Temperatures, Seiten 388/389 ist bekannt, für kryogenische Zwecke, d.h. für den Temperaturbereich < 173 K Nickelstahl mit zwischen 3,5 bis 9% Nickelgehalt für mechanisch belastbare Bauteile zu verwenden. Zum Beispiel sind solche Bauteile Tanks, die zum Aufbewahren und zum Transport von verflüssigten Gasen, wie z.B. flüssiger Luft, benötigt werden. Es ist auch bereits Nickelstahl mit 12% Nickelgehalt entwickelt worden für Temperaturen unterhalb 77 K und speziell für die Verwendung im Zusammenhang mit flüssigem Helium für 4 K. Wesentlich ist für diese Materialien, dass die Temperatur des Übergangs von duktil zu spröde des Materials unterhalb der vorgesehenen Anwendungstemperatur herabgedrückt ist. Aus dem genannten Stand der Technik sind auch noch Hinweise auf Zusätze gemacht, die in dem Nickelstahl enthalten sein können.

Für die der Erfindung entsprechende Verwendung eines Materials ist jedoch nicht nur dessen von der Temperatur abhängige mechanische Eigenschaft entscheidend, sondern es ist gefordert, dass das für den genannten Temperaturbereich mechanisch geeignete Material auch ferromagnetische Eigenschaft hat. Letztere Eigenschaft ist entscheidend z.B. für die Verwendung des Materials zur magnetischen Flussführung und/oder Flussverstärkung in Maschinen und Maschinenteilen, die supraleitende Elemente enthalten. Zum Beispiel sind berührungslose Lager bekannt, die auch supraleitende Konstruktionselemente enthalten, die vermöge magnetischer Abstossungskräfte eine rotierende Maschinenwelle in einer Lagerschale berührungslos schwebend in Position halten. Hierzu sei z.B. auf das Deutsche Gebrauchsmuster G 9403202.5 "Magnetische Lagerungseinrichtung mit Hoch-T_{c}-Supraleitermaterial und auf die US-Patentschrift 5777420 "Superconducting Synchronous Motor Construction" verwiesen.

Die JP-A-02 254 962 offenbart eine Vorrichtung zum Zuführen und Ablassen von kältermittel für eine supraleitende Rotationselektromaschine entsprechend dem Stand der Technik.

Es ist daher Aufgabe der vorliegenden Erfindung, für ein hier einschlägiges Bauteil der Vorrichtung ein Material zu verwenden, das bei den notwendig niedrigen Betriebstemperaturen die für die zu erwartende mechanische Belastung auch langzeitig ausreichende Festigkeit hat, z.B. bei den niedrigen Temperaturen nicht versprödet, und außerdem für Zwecke der Magnetflussführung und/oder -verstärkung ferromagnetische Eigenschaft aufweist. Diese Aufgabe wird mit den Merkmalen der Patentansprüche 1 bis 3 und mit Weiterbildungen gemäß den Unteransprüchen gelöst.

Es wurde als Ergebnis angestellter Untersuchungen festgestellt, dass ein Nickel-Stahl X8Ni9, DIN 1.5662, US-Norm ASTM A353, A553 für die obengenannten Zwecke ferromagnetische Eigenschaften auch noch bei Temperaturen unter 77 K hat. Es ist dies ein für die Erfindung vorzugsweise relevanter Temperaturbereich. Dieses Material neigt auch bei diesen niedrigen Temperaturen so wenig zu Versprödung, dass es bei mechanischer Belastung keinen Zähbruch erleidet. Auch Nickelstahl mit 3,5 bis 8% Nickelgehalt weist für obengenannte Zwecke noch genügend hohe ferromagnetische Eigenschaft auf, um für Elemente zur magnetischen Flussführung und/oder -verstärkung verwendbar zu sein. Entsprechendes gilt auch für Nickelstahl mit 12 bis 13% Nickelgehalt.

Die mechanische Festigkeit des aufgabengemäß geforderten Materials mit ferromagnetischer Eigenschaft spielt nicht nur bei z.B. rotierenden Maschinenteilen der auftretenden Fliehkräfte wegen eine Rolle, sondern auch bei Magneten mit Hochtemperatur-Supraleiter-Spulen ist für deren Kapselung und Halterung mechanisch zuverlässig stabiles Material vorteilhaft, wenn nicht sogar notwendig. Dies z.B. wenn die Halterung auch die Funktion als Flussführung hat.

Weitere Erläuterungen zur Erfindung werden anhand der nachfolgend beschriebenen Anwendungsbeispiele der Erfindung und der sie betreffenden Figuren gegeben.

Figur 1 zeigt einen Querschnitt eines Läufers eines Elektromotors mit supraleitender Felderregung im Läufer und einem Läuferkern als Bauteil aus erfindungsgemäß verwendetem Material.

Figur 2 zeigt eine Hochmagnetfeld-Vorrichtung mit supraleitender Magnetfeldspule, wie sie dem Prinzip nach z.B. aus der DE-A-19813211 bekannt ist.

Figur 3 zeigt eine magnetische Lagerung einer Rotorwelle unter Verwendung von Hochtemperatur-Supraleitermaterial, wie sie aus der DE-A-4436831 dem Prinzip nach bekannt ist.

Figur 4 zeigt eine supraleitende Magnetspule, wie sie aus der WO-96/08830 bekannt ist.

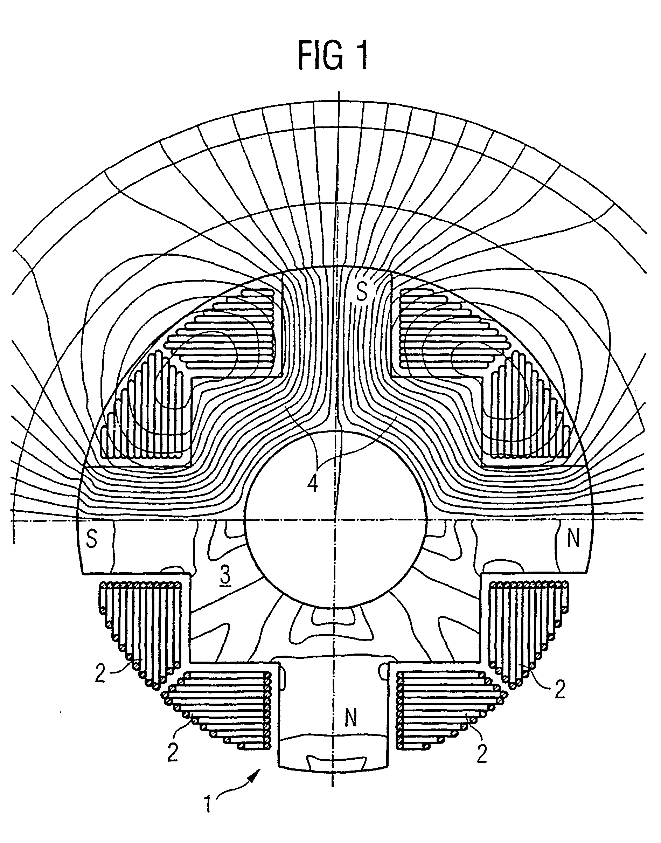

Mit 1 ist als Vorrichtung der Erfindung in Figur 1 der dort im Querschnitt, senkrecht zur Achse dargestellte Läufer eines Elektromotors mit supraleitender Erregerwicklung bezeichnet. Mit 2 sind, - in der einen Hälfte der Darstellung gezeigt -, die stufenweise ausgeführten bzw. angeordneten supraleitenden Spulen bezeichnet. Diese bestehen in wie bekannter Weise aus Bandleiter-Wickeln aus einem dazu verwendeten Hochtemperatur-Superleitermaterial. Materialien dieser Art sind hinlänglich bekannt. Ein einmal in einer solchen Spule 2 erregter Strom erzeugt ein magnetisches Feld mit im inneren Querschnittsbereich der Spule axial zur Spule gerichtetem magnetischem Feld H bzw. Magnetflussdichte B. In wie für Läufer von elektrischen Motoren bekannter Weise ist auch bei diesem Läufer ein den Magnetfluss führender Kern 3 als Bauteil aus vorteilhafterweise ferromagnetischem Material vorgesehen. Mit 4 ist eine solche Magnetfluss-Führung in diesem Kern 3 angedeutet. Bei dem wie dargestellten Aufbau des hier 4-poligen Läufers ergeben sich dann zwei Nordpole N und zwei Südpole S als Pole des Kerns 3 bzw. Läufers 1 des Motors - wie bekannt. Erfindungsgemäß besteht dieser Kern 3 aus wie anspruchsgemäßem Nickelstahl mit 9 bis 13% Nickelgehalt bzw. ist dies Stahl der DIN Norm X8 Ni9 DIN 1.5662.

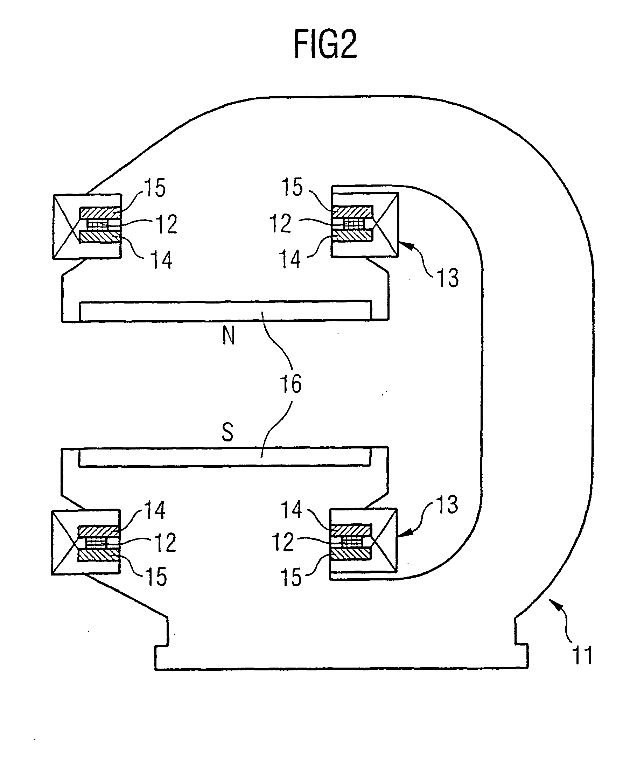

Figur 2 zeigt einen dem Aufbauprinzip nach bekannten Magneten 11 mit supraleitenden Spulen 12. Diese Spulen befinden sich in einem Kryostaten-Gehäuse 13 mit entsprechend wärmeisolierter Halterung. Mit 14 und 15 sind zwei Stahlringe als ein solches Bauteil der Erfindung bezeichnet, die hier der magnetischen Flussführung und -formung dienen. Diese Bauteile sind erheblichen magnetisch bewirkten, mechanischen Kräften ausgesetzt. Diese Ringe sind deshalb aus wie beanspruchtem Nickelstahl hergestellt. Durch diese Maßnahme der Flussführung kann eine Verbesserung der Homogenität des magnetischen Feldes zwischen den Polen 16 des Magneten 11 erreicht werden.

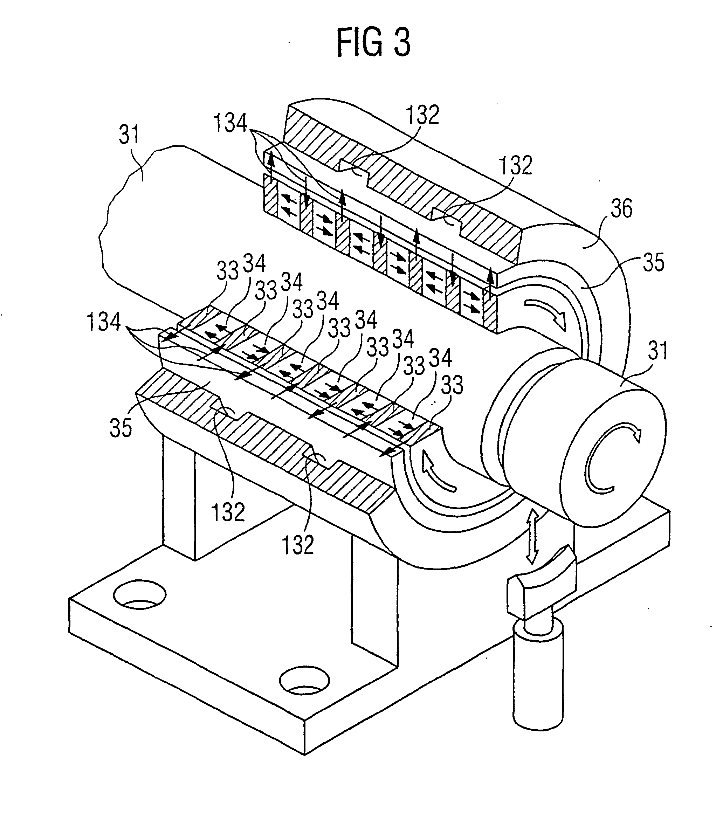

Die Figur 3 zeigt eine aus der genannten Patentschrift bekannte magnetische Schwebe-Lagerung einer Rotorwelle 31. Mit 34 sind hier auf der Welle 31 angebrachte, wie gezeigt axial polarisierte, ringförmige Permanentmagnete bezeichnet. Diese Permanentmagnete 34 sind zueinander so orientiert, dass die jeweiligen axialen magnetischen Felder zweier benachbarter Magnete 34 in diesen einander entgegengesetzt und außerhalb der Magnete dann gemeinsam radial gerichtet sind.

Zur radialen Führung des magnetischen Flusses 134, der von den Permanentmagneten ausgeht, sind auf der Welle 31 die mit 33 bezeichneten, im Schnitt dargestellten Ringe aus ferromagnetischem Material vorgesehen.

Mit 35 ist eine Schicht oder Hülse aus supraleitendem Material bezeichnet. Sie ist auf bzw. an der Innenseite der hülsenförmigen äußeren Lagerschale positioniert. Dieses supraleitende Material wird mittels eines Kühlmittels, z.B. flüssigen Stickstoffs, auf die für die Supraleitung erforderlich tiefe Temperatur gekühlt. Dieses Kühlmittel strömt in den mit 132 bezeichneten Kühlkanälen, die hier in der stillstehenden äußeren Lagerschale 36 vorgesehen sind.

Die bei Rotation der Lagerwelle mit den darauf befindlichen Permanentmagneten in dem supraleitenden Material auftretenden elektrischen Abschirmströme bewirken die für die Schwebelagerung der Welle erforderlichen magnetomotorischen Kräfte.

Bekanntermaßen wird der Spalt zwischen den rotierenden Teilen und den stillstehenden Teilen einer solchen Anordnung möglichst gering bemessen. Dies bewirkt aber, dass auch die Permanentmagnete und die Ringe 33 auf tiefe Temperaturen mit abgekühlt werden. Aus diesem Grunde ist vorgesehen, dass die Ringe 33 als durch die auftretende Fliehkraft mechanisch belastete Bauteile aus wie erfindungsgemäß beanspruchtem ferromagnetischem Nickelstahl bestehen.

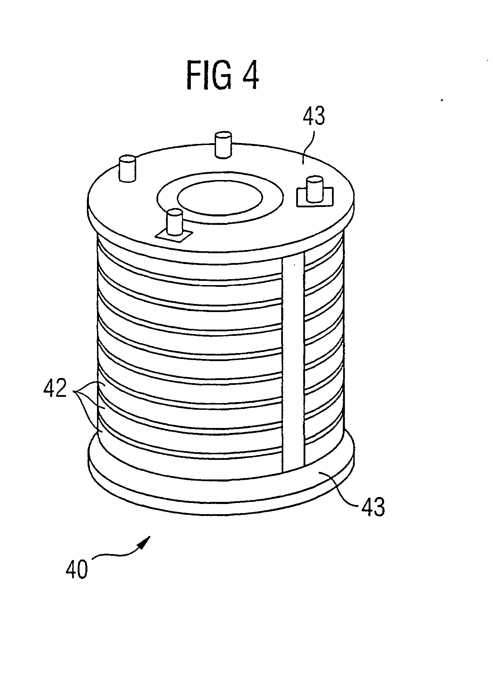

Die Magnetfeldspule 40 der Figur 4 besteht, wie dargestellt, aus in Axialrichtung aufeinander liegenden supraleitenden Spulen 42. An den Spulenenden sind als Bauteil den Spulen angepasst geformte und bemessene Ringe 43 aus ferromagnetischem, erfindungsgemäß verwendetem Nickelstahl angeordnet. Der aus dieser Spule bekanntermaßen austretende Magnetfluss bewirkt eine optimierte Flussführung.

## Patentansprüche

1. Verwendung eines 9-13 % Ni enthaltenden Stahls für ein Bauteil in Form eines Kerns (3) des Läufers (1) eines Elektromotors mit im Betrieb in einem kryogenen Temperaturbereich gehaltenen supraleitenden Spulen (2) als Läuferwicklung, welches Bauteil im Betrieb des Motors bei tiefer Temperatur zu einer magnetischen Feldführung (4) in einem Magnetfeld mit hoher Feldstärke dient und zugleich einer hohen mechanischen Belastung ausgesetzt ist.

2. Verwendung eines 9-13 % Ni enthaltenden Stahls für ein Bauteil in Form einer Scheibe oder eines Ringes (14, 15; 42) an wenigstens einer in einem kryogenen Temperaturbereich gehaltenen supraleitenden Spule (12, 40), die als Quelle eines magnetischen Feldes einer Hochmagnetfeld-Vorrichtung (11) ist, welches Bauteil im Betrieb der Vorrichtung bei tiefer Temperatur zu einer magnetischen Feldführung in dem Magnetfeld mit hoher Feldstärke und Homogenität dient und zugleich einer hohen mechanischen Belastung ausgesetzt ist.

3. Verwendung eines 9-13 % Ni enthaltenden Stahls für Bauteile in Form von Scheiben oder Ringen (43), die an ringförmigen Permanentmagneten (34) auf einer Rotorwelle (31) einer Vorrichtung zur magnetischen Schwebelagerung angeordnet sind und sich in einem kryogenen Temperaturbereich von sie umschließenden, stillstehenden Teilen aus supraleitendem Material befinden, welche Bauteile im Betrieb der Vorrichtung bei tiefer Temperatur zu einer magnetischen Feldführung (134) in dem Magnetfeld der Permanentmagnete (34) mit hoher Feldstärke dienen und zugleich einer hohen mechanischen Belastung ausgesetzt sind.

4. Verwendung nach einem der vorangehenden Ansprüche mit der Maßgabe, dass das Bauteil (3; 14, 15; 33; 43) aus 9% Nickel-Stahl X8Ni9, DIN 1.5662 besteht.

5. Verwendung nach einem der vorangehenden Ansprüche in einem Temperaturbereich, der unterhalb der Temperatur der flüssigen Luft liegt.

## Claims

1. Use of a steel containing 9-13% Ni for a component in the form of a core (3) of the rotor (1) of an electric motor with a supraconducting coil (2) held in operation in a cryogenic termperature range as rotor winding which, when the device is operating at low temperature is used for a magnetic field flux (4) in a magnetic field with a high field strength and is simultaneously subjected to a high mechanical load.

2. Use of a steel containing 9-13% Ni for a component in the form of a disk or a ring (14, 15; 42) on at least one supraconducting coil (12, 40) held in operation in a cryogenic termperature range, which is provided and acts as the source of a high magnetic field device (11) which, when the device is operating at low temperature, is used for a magnetic field flux in the magnetic field with a high field strength and homogeneity and is simultaneously subjected to a high mechanical load.

3. Use of a steel containing 9-13% Ni for a component in the form of disks or rings (43) which are arranged on annular permanent magnets (34) on a rotor shaft (31) of a device for magnetic floating bearing and are located in a cryogenic temperature range of stationary parts made of supraconduction material surrounding them, which, when the device is operating at low temperature, is used for a magnetic field flux (134) in the magnetic field of the permanent magnets (34) with high field strength and is simultaneously subjected to a high mechanical load.

4. Use according to one of the previous claims, with the condition that the component (3; 14, 15; 33; 43) is made of X8Ni9 steel with a nickel content of 9%, DIN 1.5662.

5. Use according to one of the previous claims, in a temperature range which lies below the temperature range of liquid air.

## Revendications

1. Utilisation d'un acier contenant de 9 à 13 % de Ni pour une pièce sous la forme d'un noyau (33) du rotor (1) d'un moteur électrique, ayant comme enroulement de rotor des bobines (2) supraconductrices maintenues en fonctionnement dans une plage de températures cryogénique, élément qui, lorsque le moteur fonctionne à température basse, sert au guidage (4) du champ magnétique dans un champ magnétique d'une grande intensité et est exposé en même temps à une grande sollicitation mécanique.

2. Utilisation d'un acier contenant de 9 à 13 % de Ni pour un élément sous la forme d'un disque ou d'un anneau (14, 15 ; 42) sur au moins une bobine (12, 40) supraconductrice maintenue dans un domaine de températures cryogénique, qui sert de source d'un champ m agnétique d'un dispositif (11) à grand champ magnétique, élément qui, lorsque le dispositif fonctionne à une température basse, sert à un guidage du champ magnétique dans le champ magnétique de grandes intensité et homogénéité, et est soumis en même temps à une grande sollicitation mécanique.

3. Utilisation d'un acier contenant de 9 à 13 % de Ni pour des éléments sous la forme de disques ou d'anneaux (43), qui sont disposés sur des aimants (34) permanents annulaires sur un arbre (31) de rotor d'un dispositif pour le montage magnétique flottant et qui se trouvent dans une plage de températures cryogénique de pièces fixes en matériau supraconducteur qui les entourent, ces éléments servant, lorsque le dispositif fonctionne à basse température, à un guidage (134) de champ magnétique dans le champ magnétique des aimants (34) permanents de grande intensité et en même temps étant soumis à une grande charge mécanique.

4. Utilisation suivant l'une des revendications précédentes avec l'indication que l'élément (3 ; 14, 15 ; 33 ; 43) est constitué d'acier à 9 % de nickel X8Ni9, DIN 1.5662.

5. Utilisation suivant l'une des revendications précédentes dans une plage de températures qui est inférieure à la température de l'air liquide.
